# EUROPEAN PATENT APPLICATION

(11) **EP 4 553 326 A1**
(43) Date of publication of application: **14.05.2025**
(21) Application number: 24212193.7
(22) Date of filing: 11.11.2024
(51) Int. Cl.: F16B 5/06

(54) **INJECTABLE CLAMPING PART AND RESPECTIVE USES**

(30) Priority: 13.11.2023 PT 2023119044
(71) Applicant: Simoldes Plásticos, SA, 3720-502 Oliveira de Azeméis (PT)
(72) Inventor: SILVA MENDES, PEDRO MANUEL, 4615-601 LIXA (PT)
(74) Representative: Patentree

(57) **Abstract**

The present disclosure relates to an injectable clamping part and respective uses.

It is disclosed an injectable clamping part for connecting to a fixed metallic structure comprising a polymeric clip body divided into an upper part, a middle part and a lower part, wherein the upper part of the clip body attaches against the fixed metallic structure at least a portion of a fabric layer, wherein the middle part of the clip body comprises a clamping housing-like structure connectable to a projection of the fixed metallic structure, wherein the lower part of the clip body is elastically connected with the middle part, wherein said clip body comprises an assembly direction forming an angle ranging from 10 to 30 degrees with the mechanical stress direction for assembly/disassembly said clip body.

## Description

### TECHNICAL FIELD

The present disclosure relates to an injectable clamping part and respective uses.

In particular, the present disclosure relates generally to an injectable clamping part and, more specifically, to an improved injectable clamping part that allow a reduction of the assembly time of the car and allow for an assembly/disassembly of the part.

### BACKGROUND

Fixturing systems have a very important role in assembly processes. Despite the complexity of fixturing systems, there are four main roles that fixturing systems should have. The four roles are locating, clamping, supporting and guiding parts during assembly processes. The required number and shape complexity of fixtures directly add up to the total cost of an assembly processes. Hence, designing a fixturing system for assembly is important and should be correctly done.

Regarding clamping, which is usually an element designed to hold a component or workpiece so that it still firms on its position, during an assembly or machining process, when it excerpts external forces. Clamping mechanism uses friction forces between a workpiece and its clamp. In practice, a clamp will give a force with direction opposite to its locator force direction.

One example is the clamping system to hold the carpet of a car into their right position. Usually, the original equipment manufacturer receives the fixed structure, in the form of a frame, and the carpet, which can be seen as an example of a fabric layer, is fitted on top of said frame. Afterwards, the operator mounts a piece between the frame and the carpet, wherein the carpet has to be lifted, assemble said part and put the carpet back in its final position. This is a quite costly and time-consuming operation.

Document JP2005145433 discloses a covering member for an automobile comprises an opening part positioned in front of the airbag, a rigid frame having the opening part, a flap closing the opening part and a decoration member surrounding the opening part and having a closed contour securely fixed to the frame. The flap has a peripheral edge held between the decoration member and the frame and includes a flexible exterior member made by a duplication mould on plastic layers. The technical solution anticipated by the mentioned document aims to solve a problem related with the providing of an interior lining with a simple structure in view of the difficulty in production of a tongue piece made of a material to be broken when an airbag spreads. Even using a different propose, i.e. applied to an airbag and not to the linkage between an element and the frame, this technical solution fails to anticipate the disclosed technology on this text.

Document CN216184920 discloses a car window outer decoration frame and a step-difference-free plane type closing device. The car window outer decoration frame comprises a decoration plate body, and the car inner face of the decoration plate body is provided with a first positioning part which extends towards the interior of a car and is used for being in abutting contact with the first outer side of a glass guide groove so as to achieve installation and positioning of the glass guide groove. The free side of the first positioning part is provided with an assembling part which is arranged in a bent mode in the direction of the automobile door glass and used for being installed and fixed to the metal plate assembly in a matched mode, and the assembling part is provided with a connecting piece used for installing and fixing the assembling part to the metal plate assembly. The free side of the first positioning part is further provided with a second positioning part used for extending in the direction of the glass guide groove, and the second positioning part, the decoration plate body and the first positioning part jointly define a clamping and positioning structure used for clamping and positioning the glass guide groove. The assembling process is simplified, and the attractiveness of the vehicle door structure is improved. Nevertheless, this technical solution fails to anticipate the disclosed technology on this text.

These facts are described in order to illustrate the technical problem solved by the achievements of the present document.

### GENERAL DESCRIPTION

The present disclosure relates to an injectable clamping part and respective uses. The solution of the present disclosure is applicable to any vehicle and is particularly beneficial in the production line of said vehicle and in the possibility of part's assembly/disassembly.

In the development of this new product, the aim was to develop an easier way to fix elements and at the same time, reduce the elements of a fixturing system, reducing the consumption of plastic elements in a car, allowing the reduction of cost and weight of the car. It will allow also the reduction of the assembly time of the car, representing a reduction in his final cost.

From one point, the development of this new product had to reduce the cost and provide an easier way to fix elements but at the same time, the mechanical resistance has to be maintained. In certain embodiments, the resistance of the part to mechanical stress, for example supporting the user foot directly on the piece, has to increase comparing to the fixturing systems known from the prior art.

To overcome this technical problem, it was developed an injected clamping part for connecting to a fixed structure comprising a polymeric clip body divided into an upper part, a middle part and a lower part, wherein the upper part of the clip body attaches against the fixed structure at least a portion of a fabric layer, wherein the middle part of the clip comprises a clamping housing like structure connectable to a projection of the fixed structure, wherein the lower part of the clip body is elastically connected with the middle part, wherein said clip body comprises an assembly direction forming an angle ranging from 10 to 30 degrees with the mechanical stress direction for assembly/disassembly said clip body. This design of the injected clamping part promotes ease of use, allowing the assembly/disassembly of the part and improve efficiency in the production line.

Along this description, it is considered a clamping housing like structure as a flat A-shaped, wherein the upper part of the A-shape has a discontinuity for connection to a projection of the fixed structure. The ends of the discontinuity on the upper part of the A-shape may be sloped to facilitate the connection to the projection.

This technical solution permits to overcome the above-mentioned problem because the assembly direction and the mechanical stress direction for assembly/disassembly are not aligned, i.e. they have an angle ranging from 10 to 30 degrees.

This solution overcome the technical problem, because it is not necessary an intermediate clamping piece to fix the element to a fixed structure, reducing the weight and the consumption of plastic parts, and it also reduces the time of car assembly since the clamping part is mounted directly in a one-step procedure without need, for example, of lifting the carpet to mount this piece.

The clamping part is mechanically clamped into the fixed structure through a projection. This projection can be, for example a pin, a bolt, a screw, a threaded pin, or any other suitable mean for fixing.

Even to dismantle this clamping part, the assembly kinematics must be applied, which can only be achieved with the help of an operator, which is a clear indication that the clamping part is not disassembly by accident, for example by the user foot or hand.

It is disclosed in this application an injectable clamping part for connecting to a fixed structure comprising a polymeric clip body divided into an upper part, a middle part and a lower part, wherein the upper part of the clip body attaches against the fixed structure at least a portion of a fabric layer, wherein the middle part of the clip body comprises a clamping housing like structure connectable to a projection of the fixed structure, wherein the lower part of the clip body is elastically connected with the middle part, wherein said clip body comprises an assembly direction forming an angle ranging from 10 to 30 degrees with the mechanical stress direction for assembly/disassembly said clip body.

In an embodiment, the clip body of the injectable clamping part comprises an assembly direction forming an angle ranging from 12 to 25 degrees with the mechanical stress direction for assembly/disassembly said clip body.

In an embodiment, the clip body of the injectable clamping part comprises an assembly direction forming an angle ranging from 15 to 20 degrees with the mechanical stress direction for assembly/disassembly said clip body.

In an embodiment, the clip body of the injectable clamping part is directly supported on the fixed structure.

In an embodiment, the clip body of the injectable clamping part comprises a thickness ranging from 2.0 to 3.5 mm.

In an embodiment, the clip body of the injectable clamping part comprises a thickness ranging from 2.25 to 3.25 mm.

In an embodiment, the clip body of the injectable clamping part comprises a thickness ranging from 2.5 to 3.0 mm.

In an embodiment, the material of the clip body of the injectable clamping part is a thermoplastic polymer, preferably a thermoplastic polymer selected from a list consisting of polypropylene, polyurethane, poly-vinyl chloride, acrylonitrile butadiene styrene, styrene maleic anhydride, polyphenyl ether, polycarbonate, polyoxymethylene, polyethylene terephthalate, or their combinations.

In an embodiment, the material of the fixed structure where the injectable clamping part is attached is selected from a list consisting of metallic, composite, polymeric, or their combinations.

In an embodiment, the material of the clip body of the injectable clamping part is a polypropylene filled with up to 15% (w/w) talc; preferably from 3 to 13 % (w/w), more preferably from 5 to 10% (w/w).thermoplastic polymer.

In an embodiment, the clamping housing like structure of the injectable clamping part comprises a thickness of at least 8 mm larger than the projection diameter; preferably from 4 to 8 mm, more preferably from 5 to 7 mm.

In an embodiment, the injectable clamping part comprises a coating or an injectable clamping covered by any flexible foil.

### BRIEF DESCRIPTION OF THE DRAWINGS

The following figures provide preferred embodiments for illustrating the disclosure and should not be seen as limiting the scope of invention.

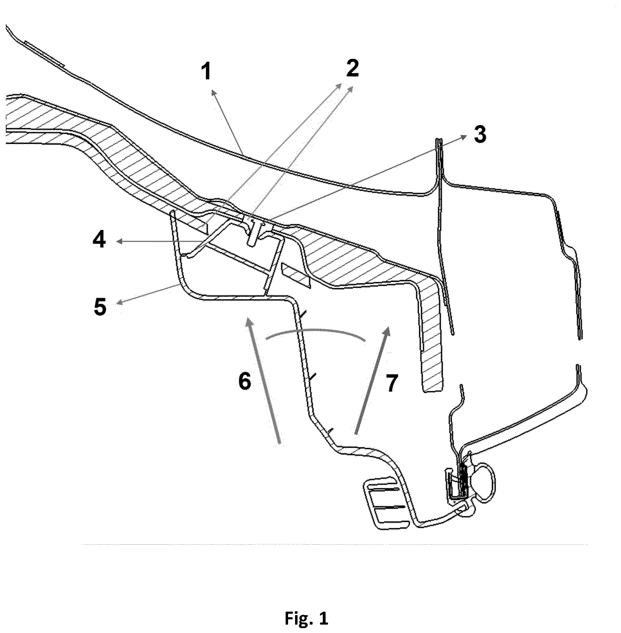

**Figure 1****:** Schematic representation of the clamping part mounted on a fixed structure.

Throughout the figures indicated above, the following elements are indicated with the respective references:
1 - fixed structure;
2-fabric layer;
3 - projection;
4 - clamping housing like structure;
5 - fixed structure;
6 - direction of mechanical request of the part;
7 - direction of assembly/disassembly of the part.

### DETAILED DESCRIPTION

The present disclosure relates to an injectable clamping part and respective uses.

In an embodiment, the developed injectable clamping part for connecting to a fixed comprises a polymeric clip body divided into an upper part, a middle part and a lower part, wherein the upper part of the clip body attaches against the fixed structure at least a portion of a fabric layer, wherein the middle part of the clip comprises a clamping housing like structure connectable to a projection of the fixed structure, wherein the lower part of the clip body is elastically connected with the middle part, wherein said clip body comprises an assembly direction forming an angle ranging from 10 to 30 degrees with the mechanical stress direction for assembly/disassembly said clip body. This angle is essential to guarantee a quick and very easy way to fix the element, for example a carpet, to the fixed structure, such as a frame.

The present disclosure relates to an injectable clamping part comprising an assembly direction forming an angle ranging from 10 to 30 degrees with the mechanical stress direction, which allows for assembly/disassembly said injectable clamping part. This design allows also for the reduce the reduction of elements of a fixturing system, reducing the consumption of plastic elements in a car, allowing the reduction of cost and weight of the car. It will allow also the reduction of the assembly time of the car in the production line.

In an embodiment, and with better results in terms of assembly/disassembly, the clip body of the clamping part comprises an assembly direction forming an angle ranging from 12 to 25 degrees with the mechanical stress direction for assembly/disassembly said clip body.

In an embodiment, and with better results in terms of assembly/disassembly, the clip body of the clamping part comprises an assembly direction forming an angle ranging from 15 to 20 degrees with the mechanical stress direction for assembly/disassembly said clip body.

In an embodiment, the clip body of the injectable clamping part is directly supported on the frame. This effect is possible because the mechanical stress of the part allows the direct support on the frame without need of any additional element, as previewed by the prior art elements, which gives a greater compression resistance than the previous solution, which had a polymer piece to perform the same function.

In an embodiment, the clip body of the clamping part comprises a thickness ranging from 2.0 to 3.5 mm, preferably and with better results ranging from 2.25 to 3.25 mm, more preferably and with even better results ranging from 2.5 to 3.0 mm. These thicknesses are important to allow an even better mechanical resistance performance against external forces, but without making it more difficult to assemble by increasing the rigidity.

In an embodiment, the material of the clip body of the injectable clamping part is a thermoplastic polymer, preferably a thermoplastic polymer selected from a list consisting of polypropylene, polyurethane, poly-vinyl chloride, acrylonitrile butadiene styrene, styrene maleic anhydride, polyphenyl ether, polycarbonate, polyoxymethylene, polyethylene terephthalate, or their combinations. Other suitable materials can also be applied, dependently of the technical function of the product where said injectable clamping part is used. The part material needs to have some elastic deformation capability which would be impossible in some specific metals or continuous glass fibre reinforced composites due to the stiffness of these materials.

In an embodiment, the material of the fixed structure where the injectable clamping part is attached is selected from a list consisting of metallic, composite, polymeric, or their combinations.

In an embodiment and for better mechanical performance, the material of the clip body of the clamping part is a polypropylene filled with up to 15% (w/w) talc, preferably from 3 to 13 % (w/w), more preferably from 5 to 10% (w/w).

In an embodiment, the clamping housing like structure of the injectable clamping part comprises a thickness of at least 8 mm larger than the projection diameter, preferably from 4 to 8 mm, more preferably from 5 to 7 mm. This will improve his mechanical performance and increase the mechanical effort required for disassemble the part.

In an embodiment, the clamping part comprises a coating or an injectable clamping covered by any flexible foil, which can have a decorative or technical purpose.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above-described embodiments are combinable.

The following claims further set out particular embodiments of the disclosure.

## Claims

1. An injectable clamping part for connecting to a fixed structure comprising a polymeric clip body divided into an upper part, a middle part and a lower part, wherein the upper part of the clip body attaches against the fixed structure at least a portion of a fabric layer,
wherein the middle part of the clip body comprises a clamping housing like structure connectable to a projection of the fixed structure,
wherein the lower part of the clip body is elastically connected with the middle part,
wherein said clip body comprises an assembly direction forming an angle ranging from 10 to 30 degrees with the mechanical stress direction for assembly/disassembly said clip body.

2. The injectable clamping part according to the previous claim, wherein the clip body comprises an assembly direction forming an angle ranging from 12 to 25 degrees with the mechanical stress direction for assembly/disassembly said clip body.

3. The injectable clamping part according to any of the previous claims, wherein the clip body comprises an assembly direction forming an angle ranging from 15 to 20 degrees with the mechanical stress direction for assembly/disassembly said clip body.

4. The injectable clamping part according to any of the previous claims, wherein the clip body is directly supported on the fixed structure.

5. The injectable clamping part according to any of the previous claims, wherein the clip body comprises a thickness ranging from 2.0 to 3.5 mm.

6. The injectable clamping part according to any of the previous claims, wherein the clip body comprises a thickness ranging from 2.25 to 3.25 mm.

7. The injectable clamping part according to any of the previous claims, wherein the clip body comprises a thickness ranging from 2.5 to 3.0 mm.

8. The injectable clamping part according to any of the previous claims, wherein the material of the clip body is a thermoplastic polymer, preferably a thermoplastic polymer selected from a list consisting of polypropylene, polyurethane, poly-vinyl chloride, acrylonitrile butadiene styrene, styrene maleic anhydride, polyphenyl ether, polycarbonate, polyoxymethylene, polyethylene terephthalate, or their combinations.

9. The injectable clamping part according to any of the previous claims, wherein the material of the fixed structure is selected from a list consisting of metallic, composite, polymeric, or their combinations.

10. The injectable clamping part according to any of the previous claims, wherein the material of the clip body is a polypropylene filled with up to 15% (w/w) talc; preferably from 3 to 13 % (w/w), more preferably from 5 to 10% (w/w).

11. The injectable clamping part according to any of the previous claims, wherein the clamping house like structure comprises a thickness of at least 8 mm larger than the projection diameter; preferably from 4 to 8 mm, more preferably from 5 to 7 mm.

12. The injectable clamping part according to any of the previous claims, comprising a coating or an injectable clamping covered by any flexible foil.
